# FASCICULE DE BREVET EUROPEEN

(11) **EP 3 215 831 B1**
(45) Date de publication et mention de la délivrance du brevet: **22.08.2018**
(21) Numéro de dépôt: 15820561.7
(22) Date de dépôt: 03.12.2015
(51) Int. Cl.: G01N 25/48

(54) **PROCÉDÉ DE CARACTÉRISATION DU VIEILLISSEMENT THERMIQUE DE MATÉRIAUX COMPOSITES, EN PARTICULIER DE MATÉRIAUX COMPOSITES À MATRICE ORGANIQUE**
VERFAHREN ZUR CHARAKTERISIERUNG DER THERMISCHEN ALTERUNG VON VERBUNDMATERIALIEN, INSBESONDERE VON VERBUNDMATERIALIEN MIT ORGANISCHER MATRIX
METHOD OF CHARACTERIZING THE THERMAL AGEING OF COMPOSITE MATERIALS, IN PARTICULAR COMPOSITE MATERIALS HAVING AN ORGANIC MATRIX

(30) Priorité: 07.11.2014 FR 1460818
(43) Date de publication de la demande: 13.09.2017
(73) Titulaire: Safran Nacelles, 76700 Gonfreville-l'Orcher (FR)
(72) Inventeur: DELEHOUZE, Arnaud, 76700 Gonfreville l'Orcher (FR); PIEL, Emmanuel, 76700 Gonfreville l'Orcher (FR); PREUD'HOMME, Nicolas, 76700 Gonfreville l'Orcher (FR)
(74) Mandataire: Gaillarde, Frédéric F. Ch.
(86) Numéro de dépôt international: PCT/FR2015/053313
(87) Numéro de publication internationale: WO 2016/071657

(56) Documents cités:
- R. POLANSKÝ ET AL: "Determination of the thermal endurance of PCB FR4 epoxy laminates via thermal analyses", POLYMER DEGRADATION AND STABILITY, vol. 105, 1 juillet 2014 (2014-07-01), pages 107-115, XP055191188, ISSN: 0141-3910, DOI: 10.1016/j.polymdegradstab.2014.03.043
- L. K. GRUNENFELDER ET AL: "Prepreg age monitoring via differential scanning calorimetry", JOURNAL OF REINFORCED PLASTICS AND COMPOSITES, vol. 31, no. 5, 13 février 2012 (2012-02-13), pages 295-302, XP055191136, ISSN: 0731-6844, DOI: 10.1177/0731684411431020
- DATABASE WPI Week 197916 Thomson Scientific, London, GB; AN 1979-30538B XP002739979, & JP S54 32388 A (SHOWA ELECTRIC WIRE CO LTD) 9 mars 1979 (1979-03-09)
- LEVEQUE D ET AL: "Analysis of how thermal aging affects the long-term mechanical behavior and strength of polymer-matrix composites", COMPOSITES SCIENCE AND TECHNOLOGY, ELSEVIER, UK, vol. 65, no. 3-4, 1 mars 2005 (2005-03-01) , pages 395-401, XP027688031, ISSN: 0266-3538 [extrait le 2005-03-01]

## Description

L'invention se rapporte à un procédé de caractérisation du vieillissement thermique de matériaux composites, en particulier de matériaux composites à matrice organique. L'invention trouve une application avantageuse dans le domaine aéronautique, domaine dans lequel les pièces en matériaux composites sont généralement soumises à des contraintes thermiques sévères.

Parmi les matériaux utilisés en aéronautique, les matériaux composites représentent une part de plus en plus importante. Les pièces en matériaux composites d'un aéronef sont soumises à des contraintes, notamment des contraintes thermiques, qui peuvent aboutir au vieillissement prématuré des pièces concernées.

Ces contraintes concernent notamment les ensembles propulsifs, à savoir les turboréacteurs et les nacelles entourant les turboréacteurs. En effet, les éléments des turboréacteurs et des nacelles en matériaux composites sont soumis à des variations thermiques importantes. Par exemple, dans le cas d'une nacelle, ces éléments sont à température ambiante au sol, et subissent en vol soit des températures très basses (pour les éléments situés dans la zone dite froide de la nacelle), soit des températures très élevées (pour les éléments situés dans la zone dite chaude de la nacelle).

Les pièces en matériau composite des nacelles sont qualifiées en fonction de caractéristiques mécaniques minimales pour une exposition à une première température donnée sur la durée de vie de l'avion, et à une deuxième température donnée (une température crête, supérieure à la première) sur une courte durée d'exposition cumulée durant la vie de l'avion.

En pratique, il arrive que les matériaux composites soient soumis à des températures supérieures ou égales au deuxième seuil, pendant une durée occasionnant une diminution non acceptable des propriétés mécaniques.

Il est par conséquent primordial d'être capable de caractériser de manière précise et rapide le vieillissement thermique d'un élément en matériau composite, notamment afin d'évaluer le niveau de perte des caractéristiques mécaniques de cet élément.

On connait des procédés qui permettent de caractériser le vieillissement thermique en évaluant le degré de décoloration d'une peinture dite primaire. Ceux-ci sont toutefois d'une précision relative car la qualité de l'évaluation est fortement dépendante de l'application de la peinture primaire (variations d'épaisseur, de l'état de surface, etc.). En outre, ces procédés ne sont naturellement applicables qu'à des pièces peintes, ce qui représente un inconvénient notable eu égard à la présence de nombreuses pièces en matériau composite non peintes.

On connait par ailleurs des procédés de contrôle semi-destructif. Ces procédés nécessitent le prélèvement d'un échantillon de matériau dont les caractéristiques mécaniques sont ensuite analysées, par exemple des procédés de type analyse mécanique dynamique (également connue sous le nom de DMA, pour « *Dynamic mechanical analysis* »). Toutefois, ce type de procédé nécessite de prélever un échantillon d'une taille importante, dont la réparation subséquente n'entre pas dans le champ des réparations dites « cosmétiques ». On connait aussi des procédés de détermination du vieillissement thermique d'un matériau composite par calorimétrie différentielle (R. POLANSKÝ ET AL: "Détermination of the thermal endurance of PCB FR4 epoxy laminates via thermal analyses",POLYMER DEGRADATION AND STABILITY, vol. 105, 1 juillet 2014 (2014-07-01), pages 107-115) et des procédés de caractérisation de vieillissement d'un matériau composite par calorimétrie différentielle à balayage modulée (L. K. GRUNENFELDER ET AL: "Prepreg age monitoring via differential scanning calorimetry",JOURNAL OF REINFORCED PLASTICS AND COMPOSITES, vol. 31, no. 5, 13 février 2012 (2012-02-13), pages 295-302). La présente invention a pour but de répondre aux besoins existants en proposant un procédé permettant de caractériser de manière précise le vieillissement thermique de pièces en matériau composite, notamment de pièces non peintes.

A cet effet, l'invention se rapporte à un procédé de caractérisation du vieillissement thermique d'une pièce en matériau composite, notamment un matériau composite à matrice organique, le procédé comportant les étapes de :
- prélever sur la pièce un échantillon de matériau composite ;
- soumettre l'échantillon à une analyse de calorimétrie différentielle à balayage modulée ;
- déterminer, à partir de la courbe représentant la composante du flux de chaleur total liée aux phénomènes irréversibles, la température d'apparition d'un extremum local, cet extremum local étant caractéristique du vieillissement thermique ;
- déterminer le vieillissement thermique du matériau composite par comparaison de la température d'apparition de l'extremum local avec un abaque de référence.

Ainsi, l'invention permet de déterminer précisément le niveau réel de vieillissement thermique d'une pièce en matériau composite, notamment une pièce embarquée sur un aéronef (par exemple une pièce de l'ensemble propulsif). La petite taille d'échantillon nécessaire à la mise en oeuvre de la méthode selon l'invention permet que la réparation de l'élément de nacelle subséquente au prélèvement entre dans le champ des réparations dites « cosmétiques » (catégorie définie par les règlementations en vigueur). C'est là un avantage important car les réparations dites cosmétiques sont bien moins longues et coûteuses à mettre en oeuvre que les réparations dites « structurales ».

Dans une réalisation, l'abaque de référence permet de déterminer la tenue résiduelle du matériau composite en fonction des propriétés mécaniques minimales requises.

Dans une réalisation, l'abaque de référence est obtenu par comparaison entre :
- des premières données, résultant d'une étude permettant de déterminer la diminution des propriétés mécaniques du matériau composite en fonction du vieillissement thermique ;
- des deuxièmes données, résultant d'une étude permettant de déterminer le vieillissement thermique en fonction de la température d'apparition de l'extremum local.

Dans une réalisation, les première données sont obtenues par analyse d'une première population d'échantillons ayant été soumis à différentes températures pendant différentes durées, de préférence selon une méthode d'analyse mécanique dynamique (ou DMA).

Dans une réalisation, les deuxièmes données sont obtenues par analyse de calorimétrie différentielle à balayage modulée (ou mDSC), d'une deuxième population d'échantillons, ces échantillons ayant été soumis à différentes températures pendant différentes durées, les différents couples temps/température de la première population d'échantillons étant identiques aux couples temps/température de la deuxième population d'échantillons.

Dans une réalisation, l'analyse de calorimétrie différentielle à balayage modulée est réalisée à des températures inférieures à 1100 °C, de préférence inférieures à 450 °C.

Dans une réalisation, le volume de l'échantillon prélevé est inférieur ou égal à 8 mm³.

Dans une réalisation, l'échantillon est prélevé sur une pièce d'un aéronef, en particulier une pièce d'un ensemble propulsif d'aéronef.

La présente invention sera mieux comprise à la lecture de la description détaillée qui suit, faite en référence aux dessins annexés, parmi lesquels :
- La figure 1 est une représentation schématique d'un dispositif de calorimétrie différentielle à balayage ;
- la figure 2 représente une courbe de montée en température utilisée pour mettre en oeuvre une analyse par calorimétrie différentielle à balayage modulée ;
- la figure 3 représente des courbes obtenues lors de l'analyse d'un matériau composite à matrice organique par calorimétrie différentielle à balayage modulée ;
- la figure 4 représente des courbes du flux de chaleur irréversible, obtenues pour différent échantillons ;
- la figure 5 est un diagramme représentant les étapes permettant de déterminer le vieillissement thermique d'une pièce en matériau composite, conformément à l'invention ;
- la figure 6 est un diagramme représentant les étapes permettant de construire un abaque de référence conforme à l'invention.

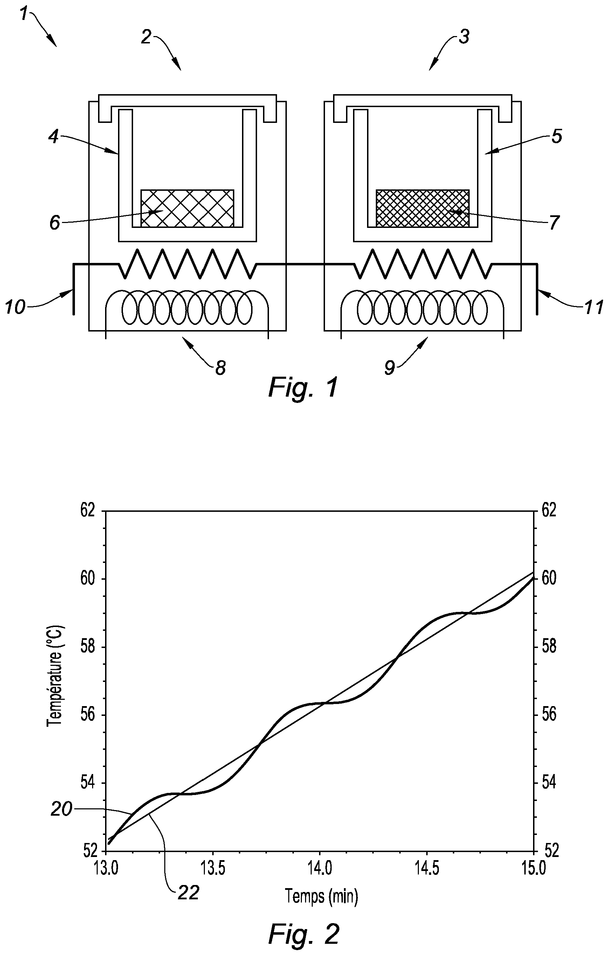

La figure 1 est un schéma d'un calorimètre 1 différentiel à balayage. Celui-ci comporte dans l'exemple deux fours 2, 3, un premier four 2 contenant dans une coupelle 4 une référence 6 et un deuxième four 3 contenant dans une coupelle 5 un échantillon 7 à étudier. On notera que la coupelle 4 du premier four 2 peut servir de référence et, dans ce cas, est laissée vide.

Chacun des fours 2, 3 est équipé d'éléments chauffants 8, 9 respectifs et les températures des fours 2, 3 sont mesurées par des résistances 10, 11 (dans l'exemple des résistances en platine) disposées au plus près des coupelles 4, 5. Alternativement, le calorimètre peut comporter un four unique dans lequel sont disposées deux coupelles et leurs résistances de mesure de température respectives.

Le calorimètre 1 permet de mettre en oeuvre les différentes techniques d'analyse thermique par calorimétrie différentielle à balayage, dont en particulier la calorimétrie différentielle à balayage modulée (également dénommée mDSC pour « *modulated differential scanning calorimetry* »)*.*

La figure 2 représente une courbe de montée en température typique d'une méthode de type mDSC, qui permet de mesurer la différence de flux de chaleur entre l'échantillon et la référence, lorsque ceux-ci sont soumis à un profil thermique sinusoïdal. On voit ainsi sur la figure 2 que la courbe 20, qui représente la montée en température dans les fours du calorimètre, oscille autour d'une courbe 22 correspondant à une montée en température linéaire.

En appliquant un profil sinusoïdal tel que celui représenté sur la figure 2, la méthode de type mDSC permet d'extraire les flux de chaleur réversibles et irréversibles liés aux phénomènes se produisant au sein de l'échantillon. En effet, la modulation sinusoïdale de la montée en température permet de discriminer dans le flux de chaleur total les composantes respectivement liées aux phénomènes réversibles et aux phénomènes irréversibles. Cette possibilité est liée au fait que la vitesse moyenne de variation de la température peut être nulle tandis que la vitesse instantanée ne l'est jamais.

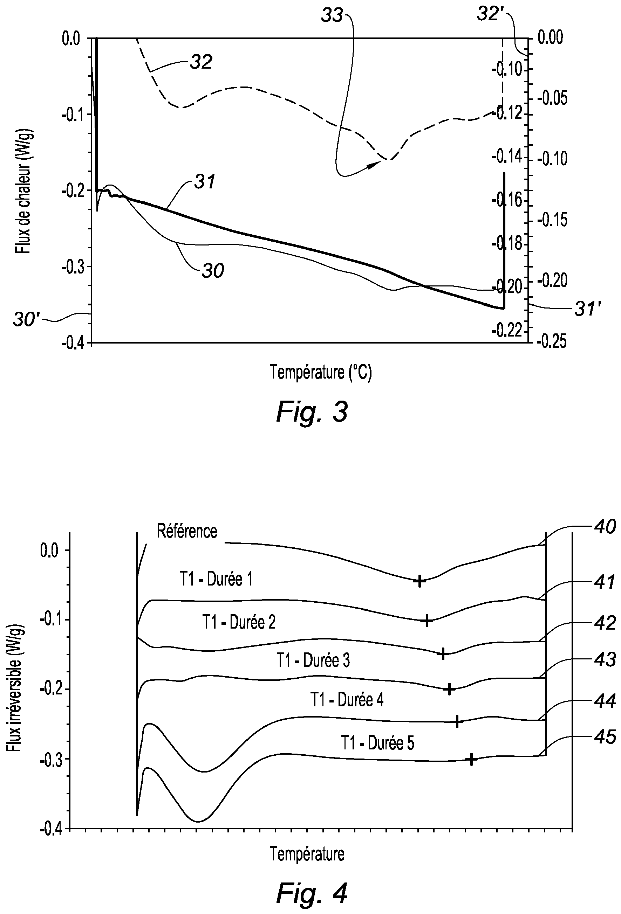

La figure 3 montre un thermogramme obtenu selon une méthode de type mDSC. Le graphe de la figure 3 représente en ordonnée le flux de chaleur (en W/g). Une première courbe 30 (associée à une première graduation 30') représente le flux de chaleur total. Une deuxième courbe 31 (associée à une deuxième graduation 31') représente la composante du flux de chaleur total liée aux phénomènes réversibles. Enfin, une troisième courbe 32 (associée à la graduation 32') représente la composante du flux de chaleur total liée aux phénomènes irréversibles.

Dans le cadre de l'invention, l'exploitation du thermogramme de la figure 3, et principalement de la composante liée aux phénomènes irréversibles, permet d'observer un pic 33. Le pic 33 est lié à un phénomène endothermique dont la température d'apparition est associée à l'effet du vieillissement thermique du matériau analysé. On notera qu'il est particulièrement avantageux, dans le cadre de l'invention, d'effectuer les analyses de calorimétrie à des températures inférieures à 1100 °C, et plus particulièrement à des températures inférieures à 450 ° C. En effet, en restant en dessous de ce seuil, on limite l'influence des fibres de renfort du matériau composite dans les phénomènes thermiques observés. Or, le vieillissement thermique d'un matériau composite embarqué à bord d'un aéronef résulte en général principalement du vieillissement thermique de la matrice (en général une résine). Il est donc pertinent que l'analyse thermique du matériau composite soit effectuée de manière à ne prendre en compte que le vieillissement thermique de la matrice.

Conformément à l'invention, l'analyse par calorimétrie différentielle à balayage modulée d'échantillons d'un matériau composite à matrice organique, incluant une référence (en général simplement constituée par une coupelle laissée vide) et des échantillons ayant préalablement étés soumis à différents couples température/durée, permet de caractériser le niveau de vieillissement thermique. La figure 4 montre par exemple les courbes du flux de chaleur « irréversible » obtenues pour l'échantillon de référence (courbe 40) et pour des échantillons ayant été exposés à une température T1, respectivement pendant une durée D1, D2, D3, D4 et D5 (courbes 41, 42, 43, 44, 45). La comparaison des différentes courbes représentées à la figure 4 permet de constater l'évolution du pic caractérisant le vieillissement thermique (pic identifié sur chaque courbe de la figure 4 par une croix). On constate que pour une température T1 donnée, lorsque la durée d'exposition augmente, l'énergie que représente le pic diminue, tandis que la température d'apparition du pic augmente. Des évolutions analogues sont également observées pour une exposition à différentes températures pendant une durée donnée.

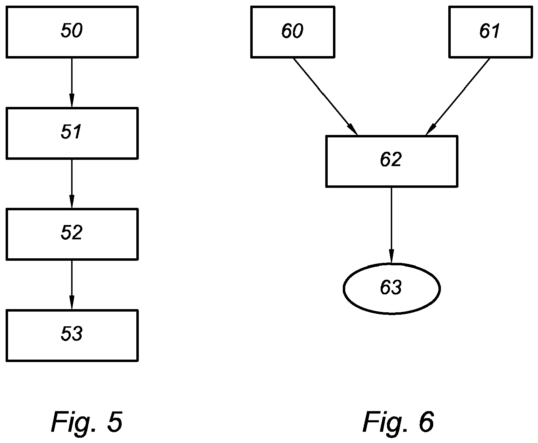

Comme représentée à la figure 6, l'analyse d'échantillons par mDSC est effectuée pour un certain nombre de couples temps/température (étape 60) et les résultats obtenus sont comparés (étape 62) aux données d'une étude de référence déterminant la dégradation des propriétés mécaniques en fonction du vieillissement thermique. Cette comparaison permet d'extraire un abaque 63 donnant la tenue mécanique résiduelle du matériau composite concerné en fonction de la température d'apparition du pic montré notamment sur la figure 4. Les données concernant le vieillissement thermique de l'étude de référence auront été obtenues par toute méthode adaptée (étape 61), par exemple au moyen d'essais de type DMA sur une population d'échantillons ayant été soumis aux mêmes couples temps/température que la population d'échantillons testés par mDSC.

L'abaque 63 obtenu conformément à l'invention est directement utilisable par les personnels en charge de la maintenance. Ainsi, il devient possible, grâce à cet abaque, de caractériser précisément le niveau de vieillissement du matériau composite constituant une pièce embarquée sur un aéronef (notamment une pièce située dans l'ensemble propulsif). Comme représenté à la figure 5, il suffit au personnel de prélever un échantillon sur la pièce concernée (étape 50) et de le soumettre à une analyse de calorimétrie (étape 51), de manière à déterminer la température du pic de référence décrit plus haut (étape 52). La température d'apparition du pic de référence est ensuite comparée avec l'abaque de référence 63, ce qui permet de déduire le niveau de vieillissement thermique de l'échantillon prélevé (étape 53).

L'invention permet de caractériser le vieillissement thermique d'une pièce en matériau composite à partir d'un échantillon de taille très réduite (environ 8 millimètres cubes), ce qui fait que la réparation subséquente au prélèvement d'un échantillon entre dans le champ des réparations dites cosmétiques. En outre, le procédé selon l'invention est applicable aux pièces peintes comme aux pièces non peintes.

Bien que l'invention ait été décrite en relation avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre des revendications.

## Revendications

1. Procédé de caractérisation du vieillissement thermique d'une pièce en matériau composite, notamment un matériau composite à matrice organique, le procédé comportant les étapes de :
- prélever (50) sur la pièce un échantillon de matériau composite ;
- soumettre (51) l'échantillon à une analyse de calorimétrie différentielle à balayage modulée ;
- déterminer (52), à partir de la courbe représentant la composante du flux de chaleur total liée aux phénomènes irréversibles, la température d'apparition d'un extremum local, cet extremum local étant caractéristique du vieillissement thermique ;
- déterminer (53) le vieillissement thermique du matériau composite par comparaison de la température d'apparition de l'extremum local avec un abaque de référence (63).

2. Procédé selon la revendication 1, dans lequel l'abaque de référence (63) permet de déterminer la tenue résiduelle du matériau composite en fonction des propriétés mécaniques minimales requises.

3. Procédé selon la revendication 1 ou 2, **caractérisé en ce que** l'abaque de référence est obtenu par comparaison entre :
- des premières données, résultant d'une étude permettant de déterminer la diminution des propriétés mécaniques du matériau composite en fonction du vieillissement thermique ;
- des deuxièmes données, résultant d'une étude permettant de déterminer le vieillissement thermique en fonction de la température d'apparition de l'extremum local.

4. Procédé selon la revendication 3, **caractérisé en ce que** les première données sont obtenues par analyse d'une première population d'échantillons ayant été soumis à différentes températures pendant différentes durées, de préférence selon une méthode d'analyse mécanique dynamique.

5. Procédé selon la revendication 4, **caractérisé en ce que** les deuxièmes données sont obtenues par analyse de calorimétrie différentielle à balayage modulée d'une deuxième population d'échantillons, ces échantillons ayant été soumis à différentes températures pendant différentes durées, les différents couples temps/température de la première population d'échantillons étant identiques aux couples temps/température de la deuxième population d'échantillons.

6. Procédé selon l'une des revendications précédentes, dans laquelle l'analyse de calorimétrie différentielle à balayage modulée est réalisée à des températures inférieures à 1100 °C, de préférence inférieures à 450 °C.

7. Procédé selon l'une des revendications précédentes, dans laquelle le volume de l'échantillon prélevé est inférieur ou égal à 8 mm³.

8. Procédé selon l'une des revendications précédentes, dans lequel l'échantillon est prélevé sur une pièce d'un aéronef, en particulier une pièce d'un ensemble propulsif d'aéronef.

## Patentansprüche

1. Verfahren zur Charakterisierung der thermischen Alterung eines Teils aus Verbundmaterial, insbesondere einem Verbundmaterial mit organischer Matrix, wobei das Verfahren die Schritte umfasst des:
- Entnehmens (50) einer Verbundmaterialprobe an dem Teil;
- Unterziehens (51) der Probe einer dynamischen Differenzkalorimetrie-Analyse;
- Bestimmens (52), anhand der Kurve, die die mit den irreversiblen Phänomenen zusammenhängende Komponente des Gesamtwärmeflusses wiedergibt, der Auftrittstemperatur eines lokalen Extremwerts, wobei dieser lokale Extremwert für die thermische Alterung charakteristisch ist;
- Bestimmens (53) der thermischen Alterung des Verbundmaterials durch Vergleich der Auftrittstemperatur des lokalen Extremwerts mit einem Referenznomogramm (63).

2. Verfahren nach Anspruch 1, wobei es das Referenznomogramm (63) ermöglicht, die Restfestigkeit des Verbundmaterials in Abhängigkeit der geforderten minimalen mechanischen Eigenschaften zu bestimmen.

3. Verfahren nach Anspruch 1 oder 2, **dadurch gekennzeichnet, dass** das Referenznomogramm erhalten wird durch Vergleich zwischen:
- ersten Daten, die sich aus einer Studie ergeben, welche es ermöglicht, die Abnahme der mechanischen Eigenschaften des Verbundmaterials in Abhängigkeit von der thermischen Alterung zu bestimmen;
- zweiten Daten, die sich aus einer Studie ergeben, welche es ermöglicht, die thermische Alterung in Abhängigkeit von der Auftrittstemperatur des lokalen Extremwerts zu bestimmen.

4. Verfahren nach Anspruch 3, **dadurch gekennzeichnet, dass** die ersten Daten durch Analyse einer ersten Population von Proben, die über verschiedene Dauern verschiedenen Temperaturen unterzogen wurden, vorzugsweise nach einem dynamischen mechanischen Analyseverfahren erhalten werden.

5. Verfahren nach Anspruch 4, **dadurch gekennzeichnet, dass** die zweiten Daten durch dynamische Differenzkalorimetrie-Analyse einer zweiten Population von Proben erhalten werden, wobei diese Proben über verschiedene Dauern verschiedenen Temperaturen unterzogen wurden, wobei die verschiedenen Zeit-/Temperatur-Paare der ersten Probenpopulation mit den Zeit-/Temperatur-Paaren der zweiten Probenpopulation identisch sind.

6. Verfahren nach einem der vorstehenden Ansprüche, wobei die dynamische Differenzkalorimetrie-Analyse bei Temperaturen von kleiner als 1100 °C, vorzugsweise kleiner als 450 °C ausgeführt wird.

7. Verfahren nach einem der vorstehenden Ansprüche, wobei das Volumen der entnommenen Probe kleiner als oder gleich 8 mm³ ist.

8. Verfahren nach einem der vorstehenden Ansprüche, wobei die Probe an einem Teil eines Flugzeugs, insbesondere einem Teil eines Flugzeug-Antriebsaggregats entnommen wird.

## Claims

1. A method for characterizing the thermal aging of a part made of composite material, in particular of an organic-matrix composite material, the method including the steps of:
- taking (50), on the part, a composite material sample;
- subjecting (51) the sample to a modulated differential scanning calorimetry analysis;
- determining (52), from the curve representing the component of the total heat flow related to the irreversible phenomena, the temperature of appearance of a local extremum, this local extremum being characteristic of thermal aging;
- determining (53) the thermal aging of the composite material by comparing the temperature of appearance of the local extremum with a reference abacus (63).

2. The method according to claim 1, wherein the reference abacus (63) allows determining the residual strength of the composite material according to the minimum mechanical properties required.

3. The method according to claim 1 or 2, **characterized in that** the reference abacus is obtained by comparison between:
- first data, resulting from a study allowing to determine the decrease of the mechanical properties of the composite material according to the thermal aging;
- second data, resulting from a study allowing to determine the thermal aging according to the temperature of appearance of the local extremum.

4. The method according to claim 3, **characterized in that** the first data are obtained by analysis of a first population of samples that have been subjected to different temperatures during different durations, preferably according to a dynamic mechanical analysis method

5. The method according to claim 4, **characterized in that** the second data are obtained by a modulated differential scanning calorimetry analysis of a second population of samples, these samples having been subjected to different temperatures for different periods, the different time/temperature pairs of the first population of samples being identical to the time/temperature pairs of the second population of samples.

6. The method according to any of the preceding claims, wherein the modulated differential scanning calorimetry analysis is carried out at temperatures below 1100 °C, preferably below 450 °C.

7. The method according to any of the preceding claims, wherein the volume of the sample taken is less than or equal to 8 mm³.

8. The method according to any of the preceding claims, wherein the sample is taken from a part of an aircraft, particularly a part of a propulsion unit of an aircraft.
